# EUROPEAN PATENT SPECIFICATION

(11) **EP 0 286 319 B1**
(45) Date of publication and mention of the grant of the patent: **29.12.1997**
(21) Application number: 88302892.0
(22) Date of filing: 30.03.1988
(51) Int. Cl.: G02B 6/42

(54) **Optical fibre device fabrication**
Herstellung eines faseroptischen Moduls
Fabrication d'un module à fibre optique

(30) Priority: 03.04.1987 GB 8708034
(43) Date of publication of application: 12.10.1988
(73) Proprietor: Hewlett-Packard Limited, Bracknell, Berkshire RG12 1HN (GB)
(72) Inventor: Preston, Keith Robert, Melton Woodbridge Suffolk, IP12 1LF (GB); West, Craig Alan, Ipswich Suffolk, IP1 3RP (GB); Bargar, Daniel Scott, Hockessin DE 19707 (US); Estrada, Calixto, Wilmington DE 19805 (US)
(74) Representative: Yennadhiou, Peter

(56) References cited:
- EP-A- 0 021 473
- EP-A- 0 100 086
- EP-A- 0 137 485
- EP-A- 0 181 532
- DE-A- 3 211 792
- US-A- 4 119 363
- REVIEW OF THE ELECTRICAL COMMUNICATION LABORATORIES, vol. 32, no. 4, July 1984, pages 598-607, Tokyo, JP; Y. TACHIKAWA et al.: "Laser diode module for analog video transmission"

## Description

The present invention relates to optical devices, or device packages, which comprise an optical fibre together with at least one other optical component, and to methods of fabrication of such devices. In particular, the invention relates to devices in which an optical fibre is aligned and fixed relative to another component, and to methods of achieving this alignment and fixation.

The importance of accurate alignment of an optical fibre with other components in optical devices is well known. In an optoelectronic device such as a transmitter or receiver, for example, alignment of an optical fibre with a laser or receiver chip is necessary to attain optimum coupling of light energy. This is especially true for transmitters, where good optical coupling permits a laser to be operated using minimum current, thus reducing the heat generated during lasing and extending the life of the laser. Thermal expansion problems inherent in transferring heat from the laser are also minimised and, for some applications, packaging costs can be reduced through elimination of the need for a thermoelectric cooler.

In fabrication, not only must the fibre be aligned in three coordinates for optimum coupling with the laser, but this alignment must also be fixed by a rigid securement and must not be altered by shrinkage forces during fixation or subsequent processing. For a single mode fibre, for example, final alignment must generally be held to within plus or minus one-half micrometer in dimensions radial to the fibre and to within one to two micrometers axially.

Welded joints, which offer rigidity and long term durability, are generally preferred for fixing the alignment. However, shrinkage of the welds on cooling is a factor that has to be considered when dealing with dimensional stability in the micrometer range. Furthermore, since the constituent parts are extremely small (a typical laser transmitter package measures on the order of 6 mm x 7 mm x 3 mm), it is important to accomplish the welds without disturbing any of the optoelectronic package bonds accomplished prior to fibre alignment. In the fabrication of a laser transmitter package the alignment and fixation operation conveniently takes place with the laser operating and emitting light. Under these conditions, to avoid adverse effects on the laser, it is critical that the laser's temperature should not be raised by the welding activity.

Conventionally, packages which incorporate sensitive components such as lasers, for example, are hermetically sealed to provide the component with a closed and protected environment. It is customary to introduce a communicating optical fibre into such packages via a suitable feedthrough connection. In fabrication, the fibre is first inserted into the feedthrough and the feedthrough is secured to the package. The portion of fibre internal to the package is then aligned with the laser, or other component and separately fixed in position, US 4615031, for example, discloses one such fabrication technique in which an anchorage clamp welded over the fibre inside the package is used to fix the alignment.

In another fabrication technique, disclosed in EP-0137485, the feedthrough passes through, and is coarsely aligned in three dimensions by a flexible member covering an aperture in the package. The final alignment in three dimensions is then provided by an external anchorage clamp which is fixed to the external wall of the package, and to the feedthrough member.

It is one object of the present invention to provide a novel optical fibre assembly with a structure which facilities optical fibre alignment and fixation and which avoids or mitigates the problems mentioned above.

It is another object of the invention to provide an improved method of fabrication of devices which need an optical fibre alignment.

Accordingly, the present invention provides an optical fibre assembly which comprises an optical fibre having an end portion secured in a feedthrough member, an optical component mounting having an optical component mounted thereon and having a wall member provided with an aperture therein, the end portion of the optical fibre extending through the aperture and being aligned in optically coupled relationship with the component, and first alignment means for securing an alignment of the end of the fibre with the component and second alignment means for securing a subsequent secondary alignment, wherein the alignment means are both secured to the wall member and to the feedthrough member, the first alignment means being secured to the feedthrough member proximate to the component, and the second alignment means being secured thereafter to the feedthrough member at a relatively greater distance from the component, characterised in that the first alignment means is adapted to provide a fixed alignment with respect to translation in all three dimensions at the first securing point, but to allow rotational movement of the feedthrough member about the first securing point, and in that the second alignment means is adapted to provide a subsequent fixed, alignment of the end of the fibre with the component by preventing further rotational movement of the feedthrough member about the first securing point.

Preferably, the first and second alignment means comprise first and second bushing members extending circumferentially around the feedthrough member.

Conveniently, the bushing members are both secured to the side of the wall member facing away from the component.

This device structure has the advantage, inter alia, that the fibre feedthrough can be fixed into the component mounting and the alignment can be made to achieve the optically coupled relationship at the same time.

The structure is also well adapted to mitigate the problems of distortion introduced by shrinkage of laser welds when used to secure the alignment means, for example. The provision of two successively installed alignment means, preferably bushing members, enables an initial, possibly coarser, alignment to be secured, which may subsequently be fine-tuned by slightly deforming the first securement, if necessary. The second alignment means is secured to the feedthrough member at a greater distance from the component than the first. Any small distortions which may occur when fixing the second alignment means are therefore effectively scaled down such that the optically coupled relationship is not then significantly disturbed.

The structure has an important application where the component in the optical fibre assembly is a semiconductor laser.

In a preferred embodiment, the first alignment means comprises a sleeve spool having a flange at one end and a barrel portion extending out from the flange. The flange is secured to the wall member and the barrel portion is secured to the feedthrough member. The barrel portion is preferably thin-walled and is secured to the feedthrough member by welds made through the wall rather than at the rim of the barrel portion.

In these circumstances, the inventors have found that any shrinkage of such welds is substantially radial. Thus, if the welds are simultaneously made and radially balanced, the potential for distortion of the first alignment in x-and y-axes can be significantly reduced. The need for readjustment of the alignment before fixing the second alignment means is consequently likewise reduced.

Also in a preferred embodiment, the second alignment means comprises a tubular bushing which surrounds the sleeve spool and having a flange at one end which is secured to the wall member. At the other end, the tubular bushing is attached to the feedthrough member.

The structure facilitates a novel method of achieving and fixing the required optically coupled relationship, which method is advantageously adapted to automation.

Accordingly, in another aspect, the present invention provides a method of aligning and fixing in optically coupled relationship an optical fibre having an end portion secured in a feedthrough member and an optical component mounted on a component mounting having a wall member provided with an aperture therein, the method comprising the steps of
(a) positioning the optical fibre end portion in the feedthrough member in the aperture and aligning the fibre in optically coupled relationship with the component,
(b) securing first alignment means to the wall member,
(c) securing the first alignment means to the feedthrough member at a first fixing region thereof proximate to the component,
(d) checking the optically coupled relationship and realigning the fibre,
(e) securing second alignment means to the wall member, and
(f) securing the second alignment means to the feedthrough member at a second, distal fixing region thereof remote from the component and the first fixing region, characterised in that the first alignment means provides a primary alignment by fixing the feedthrough member with respect to translation in all three dimensions at the first fixing region, but allows rotation of the feedthrough member about the first fixing region, in that any realignment is provided by applying appropriate leverage forces, with the feedthrough member clamped further from the component than the first fixing region, thereby distorting the securement of the first alignment means in order to reattain the optically coupled relationship, and in that the second alignment means secures a subsequent secondary alignment which prevents further rotation of the feedthrough member about the first fixing region.

Conveniently, the securing steps comprise laser welding.

Preferably the laser welding is radially balanced around the feedthrough member in order to reduce the disturbance of the optically coupled relationship which may be induced by weld shrinkage.

The optically coupled relationship may be checked and the alignment readjusted before each securing step.

By applying leverage as described in step (f), the force applied to previously made joints is effectively controlled, allowing the joints to be more easily elastically and plastically distorted to restore optimum optical coupling. Additionally, large movements at the points of leverage produce proportionately smaller movements at the end of the fibre. This gearing-down effect advantageously improves the accuracy of the realignment procedure.

Embodiments and aspects of the present invention will now be described by way of example and in more detail with reference to the accompanying drawings, in which:
Figure 1 is an enlarged elevational partial cross-section of an optoelectronic device, a transmitter, according to the invention, the section taken on line A-A of Figure 2;
Figure 2 is a plan view of the same device, the lid being shown broken to display internal components;
Figure 3 is a schematic elevational view of an apparatus for carrying out the method of the invention;
Figure 4 is a perspective view of a beam and clamp employed in the apparatus of Figure 3;
Figure 5 is a perspective view of the micromanipulating stages employed in the apparatus of Figure 3 for moving the fixture holding the device being assembled by the method of the invention;
Figure 6 is a perspective view of the type of traverser on which are mounted the laser optics used in laser welding in the securing steps of the method;
Figure 7 is a schematic diagram of the control system for automatic control of an apparatus for performing the method of the invention;
Figure 8 is an enlarged elevational view in partial cross-section of a sleeve spool forming a first alignment means according to the invention;
Figure 9 illustrates the securing steps with an alternative embodiment of the invention; and
Figure 10 illustrates further alternative embodiments of the invention.

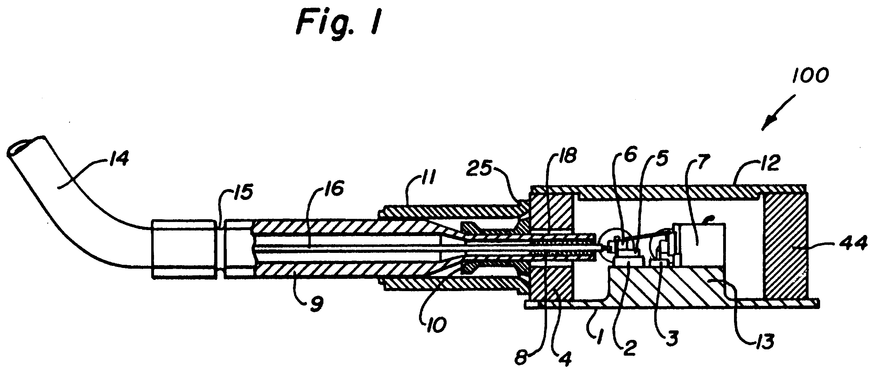

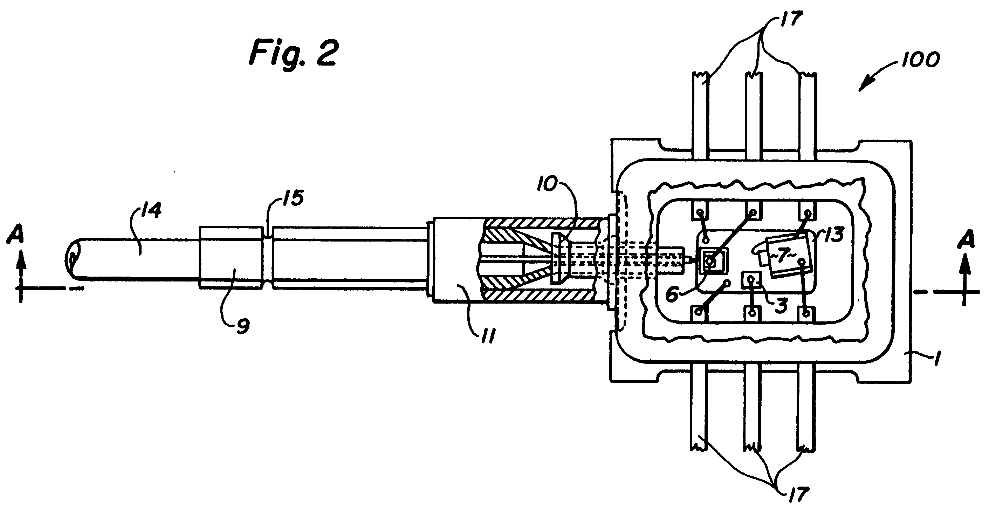

Refer now to Figures 1 and 2. Figure 1 is an enlarged elevational partial cross-section of an optoelectronic package 100 shown here for convenience configured as a transmitter and Figure 2 shows the same structure in an enlarged plan view. The base 1 of the package 100 has an internal pedestal 13, which may be an integral part of the base 1. A gold pad 2 is thermocompression bonded to the upper surface of the pedestal 13. The laser 6 is mounted on a diamond heat sink 5 which in turn is fixed to the gold pad 2. Also mounted on the pedestal 13 are a temperature sensor 3 and a photodetector 7. The package is enclosed by a walled frame of which the front wall 4 and the rear wall 44 are shown in Figure 1. Electrical connections are made via the terminals 17 mounted in the side walls of the frame. The upper side of the package is sealed by a lid 12.

An optical fibre pigtail 14 with an end portion mounted in a feedthrough tube 9 and secured by a crimp 15 is fixed in the package in optically coupled relationship with the laser 6. The structure of one suitable type of feedthrough tube is described in more detail in EP-A-0 274222 in the name of the present applicants.

Within the feedthrough tube 9, the optical fibre pigtail has the inner and outer buffer layers removed to expose the optical fibre 16 itself. The fibre 16 is provided with a lens termination in a conventional manner. The feedthrough tube 9 is necked down at its inner end to fit within a sleeve spool 10. The sleeve spool 10 acts as the first alignment means in this embodiment. The outer major diameter of the feedthrough tube 9 is mounted within a tubular flanged busing 11, which provides the second alignment means in this case. The optical fibre 16 is supported within the necked down portion of the feedthrough tube 9 by a glass seal 8 and the end of the feedthrough tube 9 passes through an oversize hole 18 in the front wall 4 so that the lens on the end of the optical fibre 16 is initially located approximately 200 to 250 µm (0.008 to 0.010 inches) from the active facet of the laser 6.

The tubular flanged bushing 11 is hermetically sealed to the wall 4 at one end and to the feedthrough tube 9 at the other. The flange 25 on the bushing 11 provides materials for a seam weld. The sleeve spool 10 is fastened (or may be sealed) to the wall 4 and fastened (or may be sealed) to the feedthrough tube 9 at the waist of the spool. The glass seal 8 hermetically seals the optical fibre 16 within the feedthrough tube 9. The outer end of the pigtail 14, which is engaged within the feedthrough tube 9 by the crimp 15, may be further sealed with heat-shrink tubing or epoxy or like sealant (neither of which are shown).

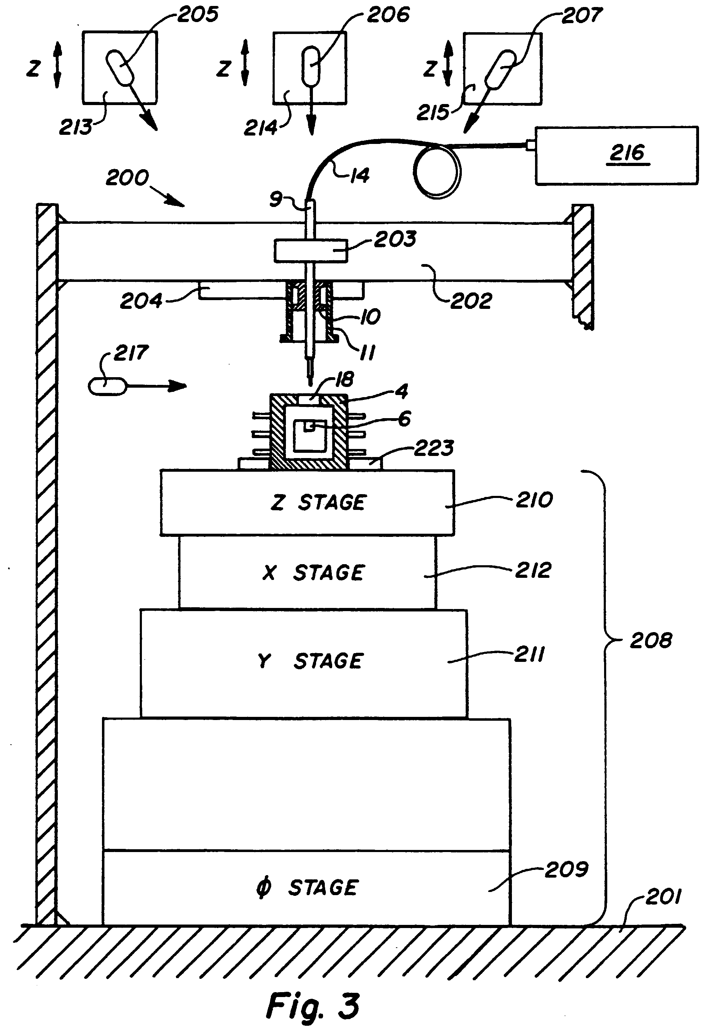

Figure 3 illustrates schematically the configuration of an apparatus 200 for assembling the transmitter package 100 and in particular for aligning, fixing and sealing the fibre in the feedthrough tube 9 in the package. In assembly the optical fibre in the feedthrough tube 9 is aligned at substantially the optical optimum relative to the electronically active device, here the laser 6, and fixed in that attitude. Additionally, the feedthrough tube 9 may conveniently be hermetically sealed to the wall 4.

The apparatus 200 features a base 201, which is aseismically mounted to isolate the mechanisms from ambient vibrations. A beam 202 is supported above the base and carries an optical fibre feedthrough clamp 203, which is shown holding a feedthrough tube 9 previously assembled to a fibre pigtail 14. The feedthrough tube 9 is clamped at its upper end near the crimp 15.

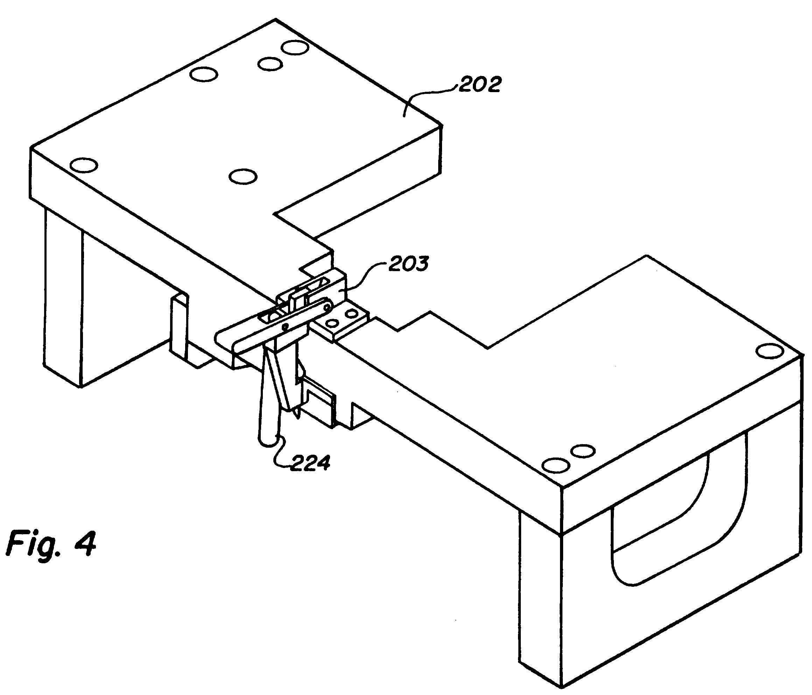

The beam 202 and clamp 203 are illustrated in more detail in Figure 4. The clamp 203 shown is an over-the-centre clamp operated by a lever mechanism 224. Operation of the clamp may be automated in a conventional manner, for example, using an air controlled actuator (not shown).

Returning to Figure 3, a partially assembled package (base 1, frame with wall 4 and optoelectronic components, of which only the laser 6 is shown for clarity) is clamped in an aligning and connecting fixture 223, which provides electrical connections to the laser 6 and holds the frame aligned vertically. The fixture 223 is itself mounted on a manipulating assembly 208 having four degrees of freedom. These are provided by four stages 209, 210, 211, 212 of a micromanipulator that is controllable in horizontal X & Y directions, vertical Z direction and for ø rotation about the Z axis. The feedthrough tube 9 is held stationary in the clamp 203 while the partially assembled package 100 is manipulated on the stages to achieve proper alignment.

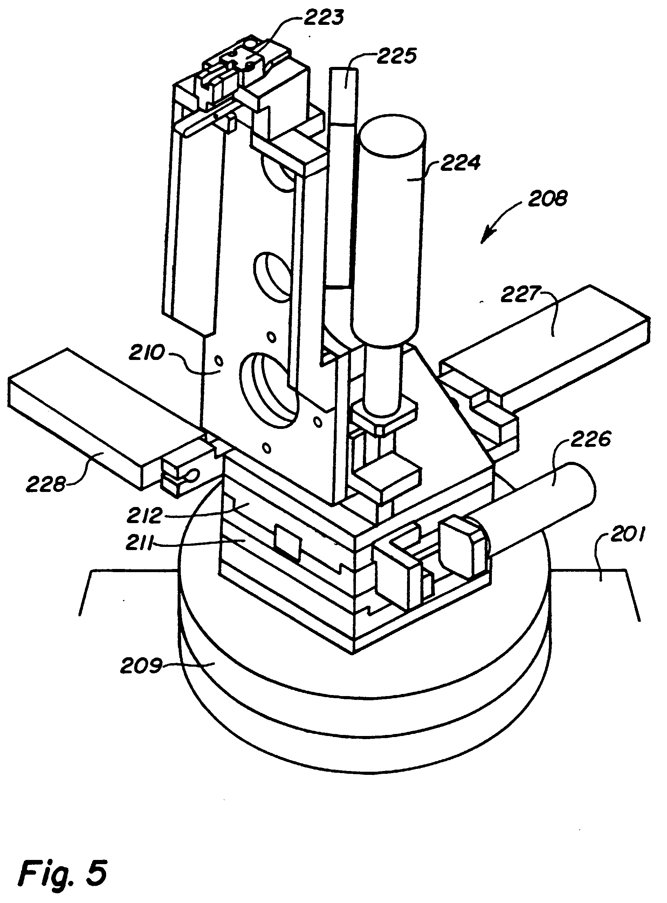

The manipulating assembly 208 may be seen in greater detail in Figure 5. The base 201 is a rigid slab of granite mounted on seismic isolators. The ø rotation stage 209 is fastened to the base and supports the Y translation stage 211. The Y stage 211 is driven by a motor 226 and its position is monitored by an optical encoder or digital length gauge 227. Similar devices drive and monitor the position of the ø rotation stage 209, but are not visible from the perspective of Figure 5.

The X translation stage 212 is supported on the Y stage 211 and is also driven by a motor (not visible from the perspective of the Figure) whilst its position is monitored by an optical encoder 228. The Z translation stage 210 is mounted on the X translation stage and is driven by another motor 224, whilst its position is monitored by a further optical encoder 25. The fixture 223, which holds the package 100, is mounted on the Z translation stage 210 and may be manually or automatically operated as appropriate.

Returning again to Figure 3, three laser welding optical collimators 205, 206, 207 are disposed at 120 degree spacings about the Z axis of rotation of the manipulating assembly 208, and the vertical axis of the fibre in the feedthrough tube 9 is aligned with this same axis. The collimators 205, 206 and 207 are mounted on micromanipulator stages 213, 214 and 215 which are controllable for motion in the vertical Z direction.

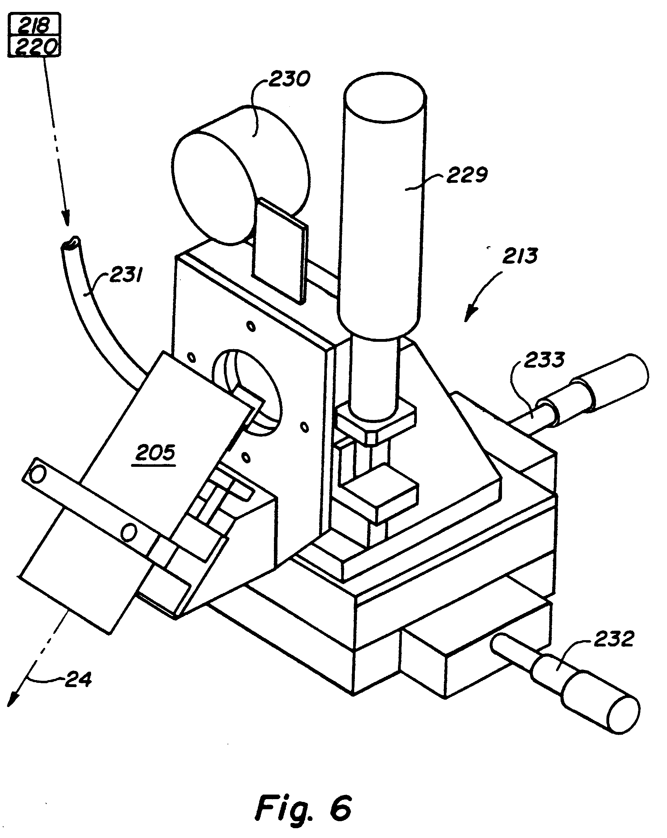

Figure 6 provides a more detailed view of one laser welding optical collimator 205 and its associated micromanipulator stage 213. The other collimators are substantially identical. The collimator 205 is driven in the Z axis by a motor 229 which is counterbalanced by a spring assembly 230. In operation, coherent light from a laser welding source 218 travels via a beamsplitter 220, which divides the light between the three collimators, to the collimator 205 along an optical fibre 231. The collimator directs the coherent beam for welding in the direction indicated by the broken arrow 24. A micrometer 232 provides tangential adjustment and a micrometer 233 provides radial adjustment for calibration purposes. The stage 213 is itself mounted to the seismically isolated base 201 at a suitable elevation.

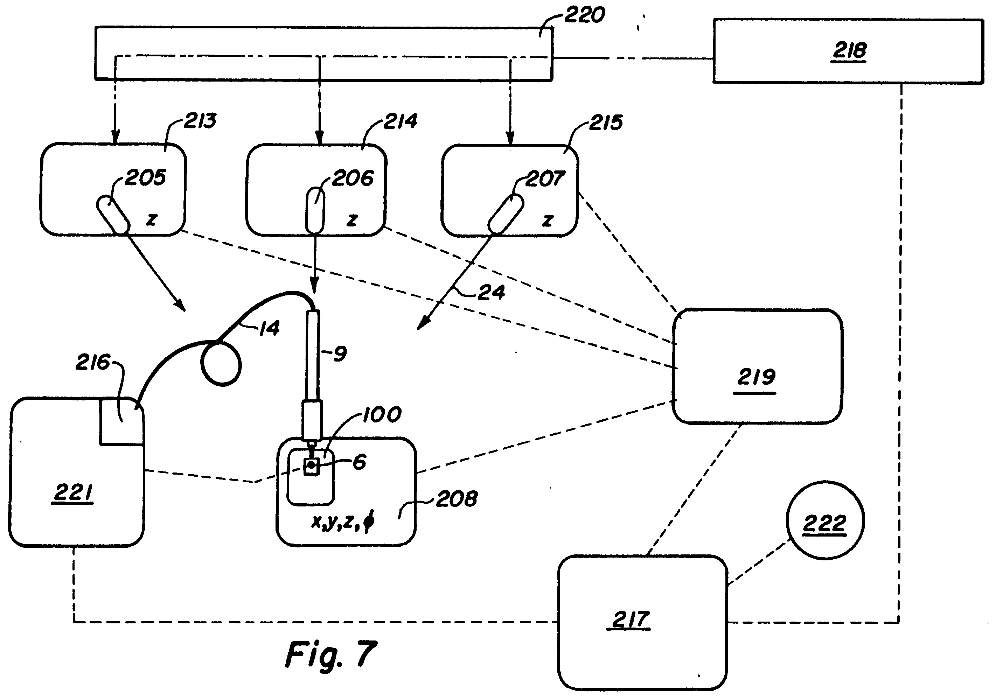

Referring now to Figure 7, the control system for the assembly apparatus 200 is under the overall coordination of a computer 217. This communicates, as indicated by the dotted lines, with the laser welding source 218, a traverse controller 219 and optoelectronic instrumentation 221 including a detector 216 which is used to monitor the accuracy of alignment.

The traverse controller 219 is a functional part of the micromanipulator system and provides dedicated microcomputer control of six of the seven manipulators of the system. The seventh manipulator is for rotational motion, Φ, and is controlled by a stepper motor. Each of the six translation manipulators feeds back position information to the controller 219 via the encoder transducers described previously. The rotary stage has its location determined by proximity switches.

The laser welding source 218 is a high power coherent laser such as a pulsed YAG laser. The laser welding source 218 produces a single pulsed beam, which is uniformly split between the three collimators by a beam splitter 220 into three beams of equal power to allow three balanced welds to be made simultaneously.

The optoelectronic instrumentation 221 drives the laser 6 of the package 100. The fibre pigtail 14 is connected into the detector 216 and the instrumentation is then used to monitor the light coupled from the laser 6 into the fibre pigtail 14 during the alignment procedure.

The alignment and fixing procedure will now be described with particular reference to Figures 3,5,6,7 and 8.

A partially assembled package 100 (base 1, frame with wall 4, leads 17 and laser 6, photodetector 7 and temperature sensor 3 all mounted on pedestal 13) is clamped in the fixture 223 on the manipulating assembly 208. Appropriate electrical connections are made between the package and the instrumentation 221.

The previously fabricated feedthrough tube 9 with the optical fibre mounted therein is held at its upper end in the clamp 203. The lower end of the feedthrough tube 9 is passed through the sleeve spool 10 and the tubular flanged bushing 11 which are themselves held suspended above the partly assembled package 100 by a retaining mechanism 204 on the underside of the beam 202.

The Z stage 210 is then actuated to optically reference the top edge of the wall 4 to a predetermined initial datum. Although the alignment procedure is carried out automatically under the control of the computer 217, a monitor 222 is provided to assist in manual control and setup of the initial datum. As the various stages of the manipulating assembly 208 are referenced by optical encoders 225, 227 and 228, this reference datum can be recorded in the computer 217.

Next the Z-translator 210 is driven upwards so that the feedthrough tube 9 enters into the oversize hole 18 in the wall 4 until the lens at the end of fibre 16 is located at about 200 to 250 µm (0.008 to 0.010 inches) from the active facet of the laser 6. The free end of the fibre pigtail 14 is plugged into the detector 216. The package 100 is then aligned with the fibre optic feedthrough until optimum optical coupling is achieved as described below.

To identify the optimum alignment position, a search is carried out, preferably under automated control, using a search algorithm in three dimensions. With the laser 6 operating under low power, the computer program controls translators 210, 211 and 212 in X, Y and Z coordinates as required to optimise the output of the laser 6 which is coupled into the pigtail 14 as sensed by the detector 216. The search, of course, may be manual using keyboard input to the control system or "joy-stick" control. In either circumstances, the optical coupling is optimised. A similar procedure may be followed in the assembly of a receiver package, when an external light source is substituted for the detector 216 and the amount of light coupled into the receiver is monitored.

The spool 10 is then released from the retaining mechanism 204 onto the external face of the wall 4 surrounding the oversize hole 18. A loose sliding fit of the inside diameter of the spool 10 on the outside diameter of tube 9 facilitates this.

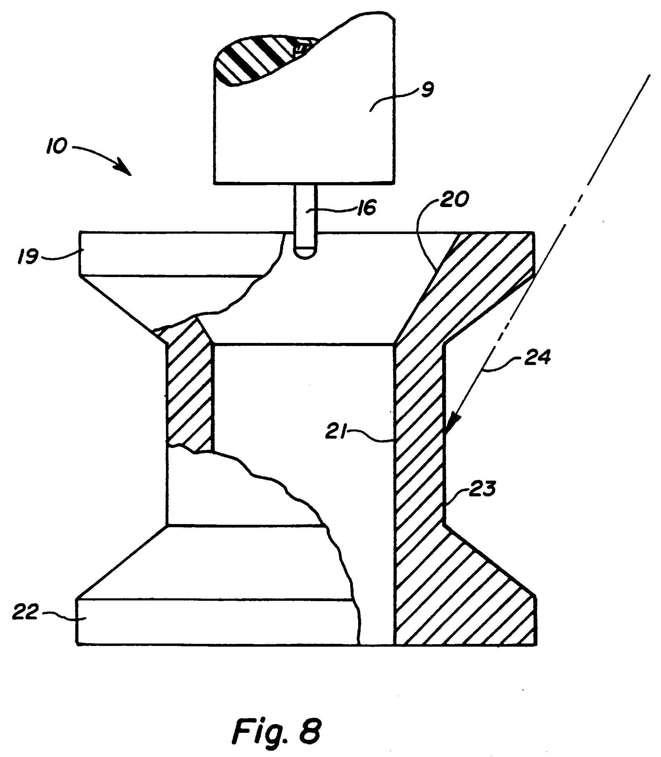

A more detailed view of the sleeve spool 10 itself is shown in Figure 8. The upper flange 19 is sufficiently wide to accommodate a tapered entry 20 so that there is reduced risk of damaging the lensed end of fibre optic core when the feedthrough tube 9 is initially guided into the bore 21 of the sleeve spool. At the other end of the spool 10, which contacts the wall 4, the lower flange 22 is sufficiently wide to cover the oversize hole 18. The barrel 23 of the spool 10 is thin-walled, such that when a laser welding beam is aimed at the mid plane of the spool 10 as represented by the broken arrow 245 a weld is achieved through the barrel wall to the feedthrough tube 9. The width of the upper flange 19 is selected to allow the laser welding beams to just clear the flange during this critical welding step. However, it will be appreciated that the upper flange itself is merely a convenience to assembly. It can be dispensed with, turning the "spool" into a "stepped washer", for example, without affect on the invention.

The laser welding optical collimators 205, 206, 207 are then driven in the Z direction so that the pre-aligned convergence of the three beams of coherent light will relate to the established datum at the upper face of the wall 4 to locate each beam on the outer perimeter of the lower flange 22 of the spool 10. The welding laser 218 is then actuated and three laser beams of equal energy are directed by the collimators to produce three fillet welds at 120 degree spacing, thus tacking the spool 10 to the wall 4.

The optical alignment is then rechecked, and X and Y adjustments made if necessary, by applying leverage to elastically and plastically deform the welds. The clearance of the feedthrough tube 9 in the spool 10 and its flexibility permit this. The placement of the clamp 203 near the end of the feedthrough tube 9 remote from the wall 4, allows adequate leverage to be applied against the lower flange 22 of the spool. It will be appreciated that it is the movement of the package 100 relative to the clamp 203 which effects the leverage. In this case, it is the package 100 mounted in the fixture 223 which is actually moved to apply the leverage, if required, but the equivalent result may equally be achieved by moving the clamp 203.

The provision of a tapered hemi-spherical lens on the end of the optical fibre 16 means that any small angle tilting of the end of the fibre 16 owing to the levered readjustment does not significantly affect the lens to laser optical coupling relationship.

At this time, the fibre to laser spacing in the Z-axis is preferably controlled to be at the maximum limit of the desired range of tolerance. This is to allow for any Z direction motion towards the laser 6 which may occur due to weld shrinkage after the spool 10 is welded to the feedthrough tube 9 in the next step.

In this step, the laser welding optical collimators 205, 206 and 207 are traversed upwards along the Z axis until their beams can be made to impinge on the mid-plane of the barrel 23 of the spool 10. Laser spot welding is then done at three radially separated points 120 degrees apart tacking the spool 10 to the feedthrough tube 9. As noted above, because the spool 10 is relatively thin at this point the welds tack the spool 10 to the outside diameter of tube 9 forming essentially radial welds despite the incident angle of the coherent laser welding beams. The inventors have found that the simultaneously made mid-plane welds also shrink radially rather than axially and do not move the tube 9 substantially in the Z direction. This is a particular advantage.

In contrast, the fillet spot welds placed between the flange 23 of the spool 10 and the face of the wall 4 tend to have major shrinkage components in the Z direction. Significant axial compensation would be required in realignment if these welds were made after welding of the spool 10 to the feedthrough tube 9. Likewise, if fillet welds were made between the inside surface of the upper flange 19 of the spool 10 and the feedthrough tube 9 similar Z axis shrinkage would be likely to occur, demanding significant readjustment during retuning of the alignment. The central welding of the spool therefore reduces the extent of realignment which is generally required.

At this stage, optionally, the clamp 203 is opened and the rotational stage 209 turned 60 degrees. The clamp 203 is then reclosed and retuning is done as before, after which three additional laser fillet welds are made between the sleeve spool 10 and the wall 4. Further retuning is then done as necessary, following which the clamp 203 is again released and a rotational sweep of at least 120 degrees is made during which overlapping welds are laid down to seam weld the spool 10 to the wall 4. Optionally also, the mid-spool welds are similarly converted to provide a hermetic seal with a seam weld. It should be noted that after each welding step the alignment is checked and readjusted, if necessary, before the next welding step is undertaken.

In the next step, the tubular flanged bushing 11 is released from the retaining mechanism 204 onto the wall 4. The alignment is again checked and any readjustment, usually minimal, is done. The laser welding optics are then positioned to place three welds to fix the tubular bushing 11 to the wall 4. After a further retuning of the alignment, the laser welding optics are moved up to tack the tubular bushing 11 to the feedthrough tube 9 at its upper end. A final check of the alignment is done.

The tubular bushing 11 is then firmly fixed in a similar manner to that described above for optionally circumferentially fixing and sealing the sleeve spool 10. The clamp 203 is released and the rotational stage 209 is turned 60 degrees. Three more tack welds are placed followed by a sweep of at least 120 degrees of overlapping welds to hermetically seal the upper end of the tubular bushing 11 to the feedthrough tube 9. At this stage rigidity is established, and further adjustment is not required.

The laser weld optics are again lowered to the reference datum, a 60 degree turn made, and three more tack welds are placed followed by a sweep of at least 120 degrees of overlapping welds to hermetically seal the tubular bushing 11 to the wall 4. Now the fibre optic feedthrough is fully captured and hermetically sealed.

In this assembly according to the invention the tubular bushing 11 provides a second anchorage to the wall 4 and to the feedthrough tube 9 for rigidity and hermetic sealing. Additionally, if the spool 10 is seam-welded to the wall 4 and to the feedthrough tube 9 as described, a second level of sealing is provided.

Following electrical check-out, the assembly is then removed from the fixture 223 for further processing, such as, for example, seam welding of the lid 12 to the package.

The procedure above is amenable to and preferably subject to automatic control. However, the procedure is equally effective under manual operator control.

The precise sequence of fixing steps is not unchangeable and may be varied to some degree, so long as a first alignment means (eg the spool 10) is fixed relatively close to the component and secures a primary alignment, which may be adjusted, and subsequently a second alignment means (eg the tubular bushing) is fixed further from the component to secure the final alignment.

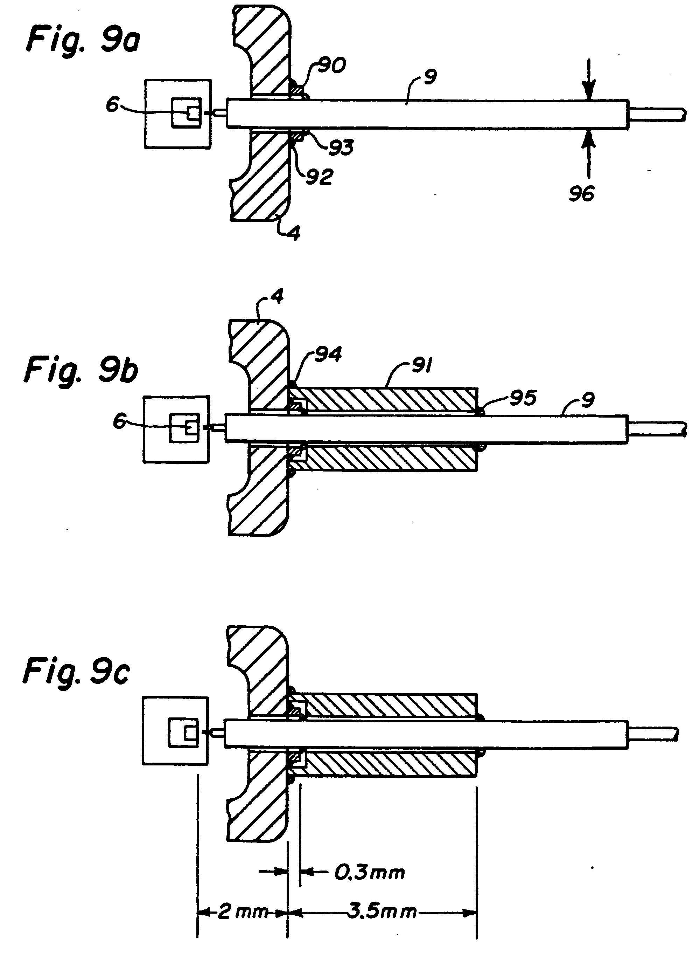

Figure 9 illustrates the main features of one alternative embodiment of the invention in the principal stages of assembly.

In this embodiment, the sleeve spool is replaced by a simple flat bushing, or washer, 90, which secures the primary alignment as shown in Figure 9(a). The fixings 92, 93, preferably laser welds, may be deformed in order to readjust the alignment by applying leverage as described above. To do this, the feedthrough tube 9 is appropriately clamped towards the end remote from the laser 6 as symbolised by the arrows 96. Final alignment is subsequently secured as shown in Figure 9(b), using a tubular bushing 91 which is fixed at both ends 94, 95 again preferably by laser welds. Figure 9(c) illustrates the final aligned configuration with typical major dimensions indicated. As shown, the washer 90 which is approximately 0.3 mm thick is fixed to the external face of the wall 4 which is about 2 mm from the laser 6. The tubular bushing being 3.5 mm long is therefore fixed to the feedthrough tube 9 substantially further from the laser at about 5.5 mm distant. This extra length is sufficient that any distortions of the final fixing 95 have a correspondingly reduced effect on the alignment at the laser 6.

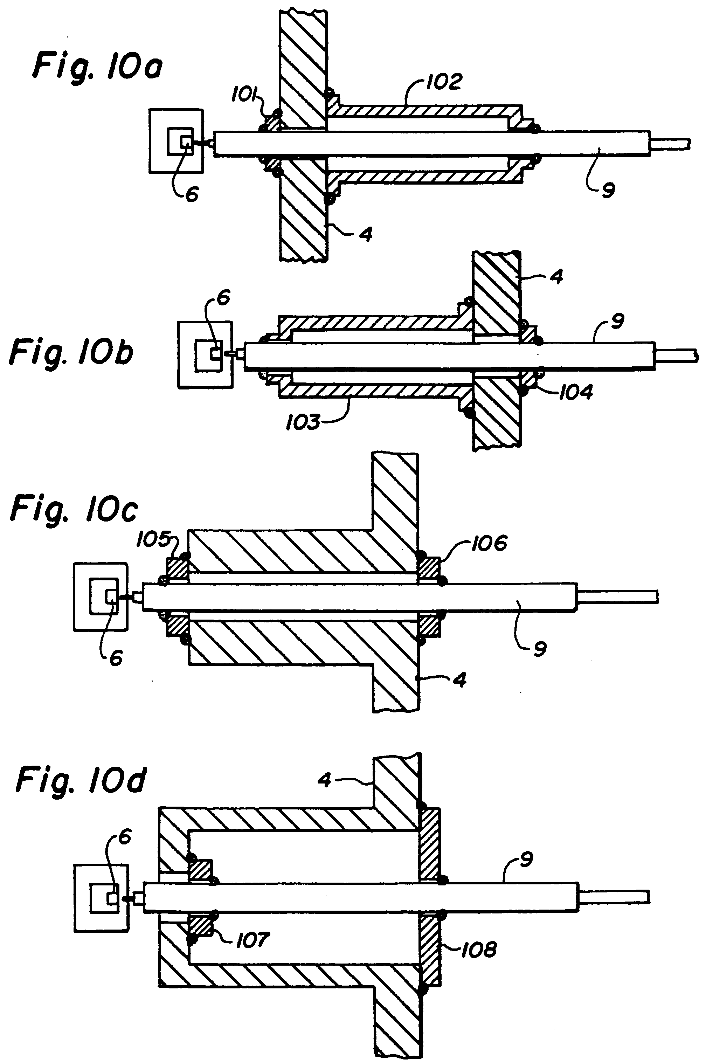

Figure 10 illustrates some further alternative embodiments which utilise the principles of the present invention. All these embodiments clearly provide two alignment means of which the second 102, 104, 106, 108 is fixed to the feedthrough tube 9 substantially further from the laser 6 than the first 101, 103, 105, 107. All allow for the realignment leverage when the feedthrough tube is appropriately clamped.

Figures 10(a), (b) and (c) illustrate that is not essential for either or both alignment means to be fixed to the same exterior face of the wall 4. As shown, the alignment means may, for example, be on opposite faces of the wall 4 without departing from the invention. The embodiments of Figures 10(c) and (d) further illustrate that it is not necessary for either alignment means to be elongated. In these embodiments, both first 105, 107 and second 106, 108 alignment means are simple washer-like bushings and the separation between the relevant points of fixing to the feedthrough tube 9 is provided by modifying the structure of the wall 4. The same effect may equally be achieved by merely making the wall 4 thicker.

It will be appreciated that the embodiments described herein represent only a few of the large range of alternative embodiments falling within the scope of the invention.

## Claims

1. An optical fibre assembly comprising
an optical fibre (16) having an end portion secured in a feedthrough member (9),
an optical component mounting having an optical component (6) mounted thereon and having a wall member (4) provided with an aperture (18) therein, the end portion of the optical fibre (16) extending through the aperture (18) and being aligned in optically coupled relationship with the component (6), and
first alignment means (10) for securing an alignment of the end of the fibre (16) with the component (6) and second alignment means (11) for securing a subsequent secondary alignment,
wherein the alignment means are both secured to the wall member (4) and to the feedthrough member (9), the first alignment means (10) being secured to the feedthrough member proximate to the component (6), and the second alignment means (11) being secured thereafter to the feedthrough member (9) at a relatively greater distance from the component,
characterised in that the first alignment means is adapted to provide a fixed alignment with respect to translation in all three dimensions at the first securing point, but to allow rotational movement of the feedthrough member (9) about the first securing point, and in that the second alignment means is adapted to provide a subsequent fixed, alignment of the end of the fibre (16) with the component (6) by preventing further rotational movement of the feedthrough member (9) about the first securing point.

2. An assembly according to claim 1 wherein the first (10) and second alignment means (11) comprise first and second bushing members.

3. An assembly according to claim 1 or 2 wherein the alignment means (10,11) are both secured to the side of the wall member (4) facing away from the component (6).

4. An assembly according to claim 2 wherein the first bushing member (10) coaxially encloses and is a close fit on the feedthrough member (9).

5. An assembly according to claim 2, 3 or 4 wherein the second bushing member (11) is axially elongate, is secured to the wall member (4) and encloses the first bushing member (10) at the end proximate to the component (6), and is secured to the feedthrough member (9) at the end remote from the component.

6. An assembly according to any preceding claim wherein at least one alignment means is secured to the feedthrough member (9) by welds.

7. An assembly according to any preceding claim wherein at least one alignment means is secured to the wall member (4) by welds.

8. An assembly according to claim 6 or claim 7 wherein the welds are radially balanced.

9. An assembly according to claim 8 wherein the welds provide a circumferential seal.

10. An assembly according to claim 2 wherein the first bushing member comprises a sleeve spool (10), having a flange (22) at one end and a barrel portion (23) extending out from the flange, wherein the flange (22) is secured to the wall member (4) and the barrel portion is secured to the feedthrough member (9).

11. An assembly according to any preceding claim wherein the component (6) is a semiconductor laser.

12. An optical fibre assembly comprising a package for an optoelectronic device (6) including
a frame with a wall (4) having a hole (18) therein,
an optoelectronic device (6) mounted within the frame with a facet of the device facing the hole (18) in the wall (4), and
an optical fibre (16) having a lensed end thereon, the optical fibre being rigidly fixed and hermetically sealed in a metallic tube (9), the lensed end of the optical fibre (16) being disposed within the frame and optically aligned with the facet of the device (6),
characterised in that,
a spool (10) is provided having a reduced thickness portion (23) thereon spaced from one end thereof, the one end of the spool abutting the wall (4) and covering the hole (18) therein, the reduced thickness portion (23) of the spool surrounding the metallic tube (9), the spool (10) being attached to the wall (4) at the one end thereof, and the spool being attached to the tube in the vicinity of the reduced thickness portion thereof by at least two radially balanced welds which secure an alignment of the end of the fibre with the facet of the device (6) in the dimension parallel to the axis of the fibre, and secure a primary alignment in the two dimensions perpendicular to the axis of the fibre, and in that a tubular flanged bushing (11) surrounds the spool (10) and is attached to the wall (4) at one end thereof and attached at the other end thereof to the metallic tube (9) in order to secure a secondary alignment of the end of the fibre (16) with the facet of the device (6) in the two dimensions perpendicular to the axis of the fibre.

13. An assembly according to claim 12 wherein the attachment of the spool (10) to the tube (9) comprises a plurality of radially balanced spot welds each of which flows into at least one adjacent spot weld to form a continuous bond between the spool (10) and the tube (9) thereby to hermetically seal the spool to the tube.

14. An assembly according to claim 12 or 13 wherein the attachment of the spool (10) to the wall (4) comprises a plurality of spot welds each of which flows into at least one adjacent spot weld to form a continuous bond between the spool (10) and the wall (4) thereby to hermetically seal the spool to the wall.

15. An assembly according to claim 12 or 13 wherein the attachment of the spool (10) to the wall (4) comprises a seam weld which forms a continuous bond between the spool (10) and the wall (4) thereby to hermetically seal the spool to the wall.

16. An assembly according to claim 12 further comprising a support bushing (11) having an opening at one end thereof and an enlarged recess therein, the spool (10) being accepted within the recess and surrounded by the bushing (11), the metallic tube (9) extending through the opening in the bushing, the bushing being attached and hermetically sealed to the tube (9) and to the wall (4).

17. An assembly according to claim 16 wherein the attachments between the bushing (11) and the tube (9) and between the bushing (11) and the wall (4) each comprise a seam weld which forms a continuous bond thereby to hermetically seal the tube to the bushing and the bushing to the wall.

18. A method of aligning and fixing in optically coupled relationship an optical fibre (16) having an end portion secured in a feedthrough member (9) and an optical component (6) mounted on a component mounting having a wall member (4) provided with an aperture (18) therein, the method comprising the steps of
(a) positioning the optical fibre (16) end portion in the feedthrough member (9) in the aperture (18) and aligning the fibre in optically coupled relationship with the component (6),
(b) securing first alignment means (10) to the wall member (4),
(c) securing the first alignment means (10) to the feedthrough member (9) at a first fixing region thereof proximate to the component (6),
(d) checking the optically coupled relationship and realigning the fibre (16),
(e) securing second alignment means (11) to the wall member (4), and
(f) securing the second alignment means (11) to the feedthrough member (9) at a second, distal fixing region thereof remote from the component (6) and the first fixing region,
characterised in that the first alignment means provides a primary alignment by fixing the feedthrough member (9) with respect to translation in all three dimensions at the first fixing region, but allows rotation of the feedthrough member (9) about the first fixing region, in that any realignment is provided by applying appropriate leverage forces, with the feedthrough member (9) clamped further from the component (6) than the first fixing region, thereby distorting the securement of the first alignment means (10) in order to reattain the optically coupled relationship, and in that the second alignment means secures a subsequent secondary alignment which prevents further rotation of the feedthrough member (9) about the first fixing region.

19. A method according to claim 18 in which any of the securing steps comprises laser welding.

20. A method according to claim 18 or 19 including providing first (10) and second alignment means (11) comprising bushing members which extend circumferentially around the feedthrough member (9) and wherein any of the securing steps comprises securing said bushing members with radially balanced welds.

21. A method according to claim 20 including circumferentially securing at least one of the bushing members to the wall member (4) and to the feedthrough member (9) with welds, thereby providing a hermetic seal between the wall member and the feedthrough member.

22. A method of aligning and fixing the lensed end of an optical fibre (16) with respect to a light emitting region on a facet of a semiconductor laser (6) mounted within a frame, the frame having a wall (4) with a hole (18) therein whereby access to the interior of the frame may be had, the method comprising the steps of
(a) sliding a spool (10) over a metallic tube (9) to which the fibre (16) is rigidly fixed and hermetically sealed,
(b) relatively moving the frame and the metallic tube (9) to cause the lensed end of the fibre (16) to project through the hole (18) and into proximity with the light emitting region of the laser (6),
(c) aligning the lensed end of the fibre (16) with the region of the laser (6) to optimise the coupling of light from the laser (6) into the fibre,
(d) sliding a spool (10) along a metallic tube (9) to abut one end of the spool against the wall (4) such that the end of the spool completely covers the hole (18) in the wall (4),
(e) applying laser energy simultaneously in substantially equal magnitude at each of a first set of locations comprising at least two locations thereby to weld the spool (10) to the wall (4) at the first set of locations such that there occurs minimal radial misalignment between the lensed end of the fibre (16) and the laser (6) upon cooling of the welds,
(f) again aligning the lensed end of the fibre (16) with respect to the laser (6) to correct any misalignment occurring therebetween as a result of the laser welding at the first set of locations,
(g) applying laser energy simultaneously in substantially equal magnitude to each of a second set of locations comprising at least two locations thereby to weld the spool (10) to the metallic tube (9), the laser energy being directed through a reduced thickness portion (23) of the spool such that, upon cooling of the welds at the second set of locations, displacement of the tube (9) relative to the spool (10) is substantially eliminated,
(h) again aligning the lensed end of the fibre (16) with respect to the laser (6) to correct any misalignment occurring therebetween as a result of the laser welding at the second set of locations, and
(m) securing second alignment means (11) to the wall member (4) and to the metallic tube (9) at a fixing region thereof remote from the component (6) and the spool (10),
characterised in that steps (e) to (h) provide an alignment of the lensed end of the fibre (16) with the laser (6) in the dimension parallel to the axis of the fibre, and a primary alignment in the two dimensions perpendicular to the axis of the fibre, and in that step (m) secures a subsequent secondary alignment in the two dimensions perpendicular to the axis of the fibre.

23. A method according to claim 22 comprising after step (h) the steps of
(i) applying laser energy simultaneously in substantially equal magnitude at each of a third set of locations equal in number to the number of locations in the first set, each of the locations in the third set being intermediate a pair of locations in the first set, thereby to weld the spool (10) to the wall (4) at the third set of locations such that there occurs minimal misalignment between the lensed end of the fibre (16) and the laser (6) upon cooling of the welds at the third set of locations,
(j) again aligning the lensed end of the fibre (16) with respect to the laser (6) in the two dimensions perpendicular to the axis of the fibre to correct any misalignment occurring therebetween as a result of the laser welding at the third set of locations,
(k) applying laser energy simultaneously in substantially equal magnitude at each of a fourth set of locations equal in number to the number of locations in the second set, each of the locations in the fourth set being intermediate a pair of locations in the second set, thereby to weld the spool (10) to the metallic tube (9) at the fourth set of locations the laser energy being directed through the reduced dimension portion (23) of the spool such that, upon cooling of the welds at the fourth set of locations, displacement of the tube relative to the spool is substantially eliminated, and
(l) again aligning the lensed end of the fibre (16) with respect to the laser (6) in the two dimensions perpendicular to the axis of the fibre to correct any misalignment occurring therebetween as a result of the laser welding at the fourth set of locations.

24. A method according to claim 22 further comprising after step (h) the step of
seam welding the spool (10) to the wall (4) of the frame and the spool to the metallic tube (9) thereby to hermetically seal the same.

25. A method according to claim 23 further comprising after step (1) the step of
seam welding the spool (10) to the wall (4) of the frame and the spool to the metallic tube (9) thereby to hermetically seal the same.

26. A method according to claim 23 wherein the metallic tube (9) is mounted in a rigid fixture (203) and the frame is mounted in a second fixture (223) movable with respect thereto, and wherein the alignment steps (c), (f), (h), (j) and (1) are accomplished by moving the frame with respect to the fixed end of the tube.

27. A method according to claim 22 wherein the metallic tube (9) is mounted in a rigid fixture (203) and the frame is mounted in a second fixture (223) movable with respect thereto, and wherein the alignment steps (c), (f) and (h) are accomplished by moving the frame with respect to the fixed end of the tube.

28. A method according to claim 23 wherein the frame is mounted in a rigid fixture (203) and the free end of the metallic tube (9) opposite the lensed end of the fibre (16) is mounted in a second fixture (223) movable with respect to the frame, and wherein the alignment steps (c), (f), (h), (j) and (1) are accomplished by manipulating the free end of the tube.

29. A method according to claim 22 wherein the frame is mounted in a rigid fixture (203) and the free end of the metallic tube (9) opposite the lensed end of the fibre (16) is mounted in a second fixture (223) movable with respect to the frame, and wherein the alignment steps (c), (f) and (h) are accomplished by manipulating the free end of the tube.

30. A method according to claim 23 wherein the frame is mounted in a rigid fixture (203) and the free end of the metallic tube (9) opposite the lensed end of the fibre (16) is mounted in a second fixture (223) movable with respect to the frame, with the length of the metallic tube (9) between the free end and the spool (10) being greater than the length of the tube between the lensed end of the fibre (16) and the spool (10), and wherein the alignment steps (c), (f), (h), (j) and (1) are accomplished by manipulating the free end of the tube such that movement of the free end of the tube for a predetermined distance results in movement of the lensed end of the fibre (16) for a distance that is reduced in proportion to the ratio of the lengths.

31. A method according to claim 22 wherein the frame is mounted in a rigid fixture (203) and the free end of the metallic tube (9) opposite the lensed end of the fibre (16) is mounted in a second fixture (223) movable with respect to the frame, with the length of the metallic tube (9) between the free end and the spool (10) being greater than the length of the tube between the lensed end of the fibre (16) and the spool (10), and wherein the alignment steps (c), (f) and (h) are accomplished by manipulating the free end of the tube such that movement of the free end of the tube for a predetermined distance results in movement of the lensed end of the fibre (16) for a distance that is reduced in proportion to the ratio of the lengths.

## Patentansprüche

1. Eine Lichtleitfaseranordnung mit folgenden Merkmalen:
einer Lichtleitfaser (16) mit einem Endabschnitt, der in einem Durchführungsbauglied (9) gesichert ist,
einer Optikkomponentenhalterung mit einer Optikkomponente (6), die auf derselben angebracht ist, und mit einem Wandbauglied (4), das mit einer Öffnung (18) in demselben versehen ist, wobei sich der Endabschnitt der Lichtleitfaser (16) durch die Öffnung (18) erstreckt und in optisch gekoppelter Beziehung mit der Komponente (6) ausgerichtet ist, und
einer ersten Ausrichtungseinrichtung (10) zum Sichern einer Ausrichtung des Endes der Faser (16) mit der Komponente (6) und einer zweiten Ausrichtungseinrichtung (11) zum Sichern einer folgenden Sekundärausrichtung,
wobei die Ausrichtungseinrichtungen beide an dem Wandbauglied (4) und an dem Durchführungsbauglied (9) gesichert sind, wobei die erste Ausrichtungseinrichtung (10) an dem Durchführungsbauglied in der Nähe der Komponente (6) gesichert ist, während die zweite Ausrichtungseinrichtung (11) anschließend an dem Durchführungsbauglied (9) in einem relativ größeren Abstand von der Komponente befestigt ist,
dadurch gekennzeichnet, daß die erste Ausrichtungseinrichtung angepaßt ist, um eine befestigte Ausrichtung bezüglich einer Translation in allen drei Dimensionen an dem ersten Sicherungspunkt zu schaffen, um jedoch eine Drehbewegung des Durchführungsbauglieds (9) um den ersten Sicherungspunkt herum zu erlauben, und daß die zweite Ausrichtungseinrichtung angepaßt ist, um eine folgende befestigte Ausrichtung des Endes der Faser (16) mit der Komponente (6) durch Verhindern einer weiteren Drehbewegung des Durchführungsbauglieds (9) um den ersten Sicherungspunkt herum zu schaffen.

2. Eine Anordnung gemäß Anspruch 1, bei der die erste (10) und die zweite Ausrichtungseinrichtung (11) ein erstes und ein zweites Hülsenbauglied aufweisen.

3. Eine Anordnung gemäß Anspruch 1 oder 2, bei der die Ausrichtungseinrichtungen (10, 11) beide an der Seite des Wandbauglieds (4), die von der Komponente (6) weg gerichtet ist, gesichert sind.

4. Eine Anordnung gemäß Anspruch 2, bei der das erste Hülsenbauglied (10) das Durchführungsbauglied (9) koaxial umgibt und eine enge Passung zu demselben bildet.

5. Eine Anordnung gemäß Anspruch 2, 3 oder 4, bei der das zweite Hülsenbauglied (11) axial länglich ist, an dem Wandbauglied (4) gesichert ist, das erste Hülsenbauglied (10) an dem Ende in der Nähe der Komponente (6) umgibt, und an dem Durchführungsbauglied (9) an dem Ende, das von der Komponente entfernt ist, gesichert ist.

6. Eine Anordnung gemäß einem vorhergehenden Anspruch, bei der zumindest eine Ausrichtungseinrichtung durch Schweißverbindungen an dem Durchführungsbauglied (9) gesichert ist.

7. Eine Anordnung gemäß einem vorhergehenden Anspruch, bei der zumindest eine Ausrichtungseinrichtung durch Schweißverbindungen an dem Wandbauglied (4) gesichert ist.

8. Eine Anordnung gemäß Anspruch 6 oder 7, bei der die Schweißverbindungen radial ausgeglichen sind.

9. Eine Anordnung gemäß Anspruch 8, bei der die Schweißverbindungen eine Umfangsabdichtung schaffen.

10. Eine Anordnung gemäß Anspruch 2, bei der das erste Hülsenbauglied einen Hülsenspulenkörper (10) mit einem Flansch (22) an einem Ende und einem Körperabschnitt (23), der sich aus dem Flansch heraus erstreckt, aufweist, wobei der Flansch (22) an dem Wandbauglied (4) gesichert ist, während der Körperabschnitt an dem Durchführungsbauglied (9) gesichert ist.

11. Eine Anordnung gemäß einem vorhergehenden Anspruch, bei der die Komponente (6) ein Halbleiterlaser ist.

12. Eine Lichtleitfaseranordnung mit einem Gehäuse für ein optoelektronisches Bauelement (6) mit folgenden Merkmalen:
einem Rahmen mit einer Wand (4) mit einem Loch (18) in derselben,
einem optoelektronischen Bauelement (16), das in dem Rahmen befestigt ist, wobei eine Seite des Bauelements dem Loch (18) in der Wand (4) gegenüberliegt, und
einer Lichtleitfaser (16) mit einem mit einer Linse versehenen Ende an derselben, wobei die Lichtleitfaser in einer Metallröhre (9) starr befestigt und hermetisch abgedichtet ist, wobei das mit einer Linse versehene Ende der Lichtleitfaser (16) innerhalb des Rahmens angeordnet und mit der Facette des Bauelements (6) optisch ausgerichtet ist,
dadurch gekennzeichnet, daß
ein Spulenkörper (10) mit einem Abschnitt (23) mit reduzierter Dicke an demselben, der von einem Ende desselben beabstandet ist, vorgesehen ist, wobei das eine Ende des Spulenkörpers an der Wand (4) anstößt und das Loch (18) in derselben bedeckt, wobei der Abschnitt (23) mit reduzierter Dicke des Spulenkörpers die Metallröhre (9) umgibt, wobei der Spulenkörper (10) an der Wand (4) an dem einen Ende desselben angebracht ist, und wobei der Spulenkörper an der Röhre in der Nähe des Abschnitts mit reduzierter Dicke desselben durch zumindest zwei radial ausgeglichene Schweißverbindungen angebracht ist, welche eine Ausrichtung des Endes der Faser mit der Facette des Bauelements (6) in der Dimension parallel zu der Achse der Faser sichern, und eine Primärausrichtung in den zwei Dimensionen senkrecht zu der Achse der Faser sichern, und daß eine röhrenförmige geflanschte Hülse (11) den Spulenkörper (10) umgibt und an der Wand (4) an einem Ende derselben angebracht ist, und an dem anderen Ende derselben an der metallischen Röhre (9) angebracht ist, um eine Sekundärausrichtung des Endes der Faser (16) mit der Facette des Bauelements (6) in den zwei Dimensionen senkrecht zu der Achse der Faser zu sichern.

13. Eine Anordnung gemäß Anspruch 12, bei der die Halterung des Spulenkörpers (10) an der Röhre (9) eine Mehrzahl von radial ausgeglichenen Punktschweißverbindungen umfaßt, von denen jede in zumindest eine benachbarte Punktschweißverbindung fließt, um eine durchgehende Verbindung zwischen dem Spulenkörper (10) und der Röhre (9) zu schaffen, um dadurch den Spulenkörper an der Röhre hermetisch abzudichten.

14. Eine Anordnung gemäß Anspruch 12 oder 13, bei der die Halterung des Spulenkörpers (10) an der Wand (4) eine Mehrzahl von Punktschweißverbindungen umfaßt, von denen jede in zumindest eine benachbarte Punktschweißverbindung fließt, um eine durchgehende Verbindung zwischen dem Spulenkörper (10) und der Wand (4) zu bilden, wodurch der Spulenkörper an der Wand hermetisch abgedichtet wird.

15. Eine Anordnung gemäß Anspruch 12 oder 13, bei der die Halterung des Spulenkörpers (10) an der Wand (4) eine Nahtschweißverbindung umfaßt, welche eine durchgehende Verbindung zwischen dem Spulenkörper (10) und der Wand (4) schafft, um dadurch den Spulenkörper an der Wand hermetisch abzudichten.

16. Eine Anordnung gemäß Anspruch 12, die ferner eine Trägerhülse (11) mit einer Öffnung an einem Ende derselben und einer vergrößerten Ausnehmung in derselben aufweist, wobei der Spulenkörper (10) innerhalb der Ausnehmung aufgenommen und durch die Hülse (11) umgeben ist, wobei sich die Metallröhre (9) durch die Öffnung in der Hülse erstreckt, wobei die Hülse an der Röhre (9) und an der Wand (4) angebracht und hermetisch abgedichtet ist.

17. Eine Anordnung gemäß Anspruch 16, bei der die Halterungen zwischen der Hülse (11) und der Röhre (9) und zwischen der Hülse (11) und der Wand (4) jeweils eine Nahtschweißverbindung aufweisen, welche eine durchgehende Verbindung bildet, um dadurch die Röhre (9) an der Hülse und die Hülse an der Wand hermetisch abzudichten.

18. Ein Verfahren zum Ausrichten und Befestigen einer Lichtleitfaser (16), die einen Endabschnitt aufweist, der in einem Durchführungsbauglied (9) gesichert ist, und einer optischen Komponente (6) in optisch gekoppelter Beziehung, die auf einer Komponentenhalterung angebracht ist, die ein Wandbauglied (4) aufweist, das mit einer Öffnung (18) in demselben versehen ist, wobei das Verfahren folgende Schritte aufweist:
(a) Positionieren des Endabschnitts der Lichtleitfaser (16) in dem Durchführungsbauglied (9) in der Öffnung (18) und Ausrichten der Faser in optisch gekoppelter Beziehung mit der Komponente (6),
(b) Sichern einer ersten Ausrichtungseinrichtung (10) an dem Wandbauglied (4),
(c) Sichern der ersten Ausrichtungseinrichtung (10) an dem Durchführungsbauglied (9) an einer ersten Befestigungsregion desselben in der Nähe der Komponente (6),
(d) Überprüfen der optisch gekoppelten Beziehung und Neuausrichten der Faser (16),
(e) Sichern einer zweiten Ausrichtungseinrichtung (11) an dem Wandbauglied (4), und
(f) Sichern der zweiten Ausrichtungseinrichtung (11) an dem Durchführungsbauglied (9) an einer zweiten entfernten Befestigungsregion desselben, die von der Komponente (6) und der ersten Befestigungsregion entfernt ist,
dadurch gekennzeichnet, daß die erste Ausrichtungseinrichtung eine Primärausrichtung durch Befestigen des Durchführungsbauglieds (9) bezüglich einer Translation in allen drei Dimensionen an der ersten Befestigungsregion schafft, jedoch eine Drehung des Durchführungsbauglieds (9) um die erste Befestigungsregion zuläßt, daß eine beliebige Neuausrichtung durch Anlegen geeigneter Hebelkräfte geliefert wird, wobei das Durchführungsbauglied (9) weiter von der Komponente (6) als die erste Befestigungsregion geklammert ist, wodurch die Sicherung der ersten Ausrichtungseinrichtung (10) verzerrt wird, um die optisch gekoppelte Beziehung wiederzuerhalten, und daß die zweite Ausrichtungseinrichtung eine folgende Sekundärausrichtung sichert, welche eine weitere Drehung des Durchführungsbauglieds (9) um die erste Befestigungsregion verhindert.

19. Ein Verfahren gemäß Anspruch 18, bei dem ein beliebiger der Befestigungsschritte Laserschweißen aufweist.

20. Ein Verfahren gemäß Anspruch 18 oder 19, das das Bereitstellen einer ersten (10) und einer zweiten Ausrichtungseinrichtung (11) umfaßt, welche Hülsenbauglieder aufweisen, welche sich umfangsmäßig um das Durchführungsbauglied (9) erstrecken, und bei dem ein beliebiger der Befestigungsschritte ein Sichern der Hülsenbauglieder mit radial ausgeglichenen Schweißverbindungen umfaßt.

21. Ein Verfahren gemäß Anspruch 20, das ein umfangsmäßiges Sichern zumindest eines der Hülsenbauglieder an dem Wandbauglied (4) und an dem Durchführungsbauglied (9) mit Schweißverbindungen umfaßt, wodurch eine hermetische Abdichtung zwischen dem Wandbauglied und dem Durchführungsbauglied geschaffen wird.

22. Ein Verfahren zum Ausrichten und Befestigen des mit einer Linse versehenen Endes einer Lichtleitfaser (16) bezüglich einer Licht-emittierenden Region in einer Facette eines Halbleiterlasers (6), der innerhalb eines Rahmens befestigt ist, wobei der Rahmen eine Wand (4) mit einem Loch (18) in derselben aufweist, wodurch ein Zugriff auf das Innere des Rahmens erhalten werden kann, wobei das Verfahren folgende Schritte aufweist:
(a) Schieben eines Spulenkörpers (10) über eine Metallröhre (9), an der die Faser (16) starr befestigt und hermetisch abgedichtet ist,
(b) relatives Bewegen des Rahmens und der Metallröhre (9), um zu bewirken, daß das mit einer Linse versehene Ende der Faser (16) durch das Loch (18) vorsteht und sich in der Nähe der Licht-emittierenden Region des Lasers (6) befindet,
(c) Ausrichten des mit einer Linse versehenen Endes der Faser (16) mit der Region des Lasers (6), um die Kopplung von Licht von dem Laser (6) in die Faser zu optimieren,
(d) Schieben des Spulenkörpers (10) entlang der Metallröhre (9), um ein Ende des Spulenkörpers in eine anstoßende Beziehung gegenüber der Wand (4) zu bringen, derart, daß das Ende des Spulenkörpers das Loch (18) in der Wand (4) vollständig bedeckt,
(e) Anlegen von Laserenergie einer im wesentlichen gleichen Größe gleichzeitig an jeden eines ersten Satzes von Orten, die zumindest zwei Orte aufweisen, um dadurch den Spulenkörper (10) an dem ersten Satz von Orten an die Wand (4) zu schweißen, derart, daß eine minimale radiale Fehlausrichtung zwischen dem mit einer Linse versehenen Ende der Faser (16) und dem Laser (6) beim Abkühlen der Schweißverbindungen auftritt,
(f) Wiederausrichten des mit einer Linse versehenen Endes der Faser (16) bezüglich des Lasers (6), um jede Fehlausrichtung zu korrigieren, die zwischen denselben als Ergebnis des Laserschweißens an dem ersten Satz von Orten auftritt,
(g) Anlegen von Laserenergie einer im wesentlichen gleichen Größe gleichzeitig an jeden eines zweiten Satzes von Orten, der zumindest zwei Orte aufweist, um dadurch den Spulenkörper (10) an die Metallröhre (9) zu schweißen, wobei die Laserenergie durch einen Abschnitt (23) mit reduzierter Dicke des Spulenkörpers gerichtet wird, derart, daß bei einer Abkühlung der Schweißverbindungen an dem zweiten Satz von Orten eine Verschiebung der Röhre (9) bezüglich des Spulenkörpers (10) im wesentlichen beseitigt ist,
(h) Wiederausrichten des mit einer Linse versehenen Endes der Faser (16) bezüglich des Lasers (6), um jede Fehlausrichtung zu korrigieren, die zwischen denselben als Ergebnis des Laserschweißens an dem zweiten Satz von Orten auftritt, und
(m) Sichern einer zweiten Ausrichtungseinrichtung (11) an dem Wandbauglied (4) und an der Metallröhre (9) an einer Befestigungsregion derselben, die von der Komponente (6) und dem Spulenkörper (10) entfernt ist,
dadurch gekennzeichnet, daß die Schritte (e) bis (h) eine Ausrichtung des mit einer Linse versehenen Endes der Faser (16) mit dem Laser (6) in der Dimension parallel zu der Achse der Faser und eine Primärausrichtung in den zwei Dimensionen senkrecht zu der Achse der Faser schaffen, und daß der Schritt (m) eine folgende Sekundärausrichtung in den zwei Dimensionen senkrecht zu der Achse der Faser schafft.

23. Ein Verfahren gemäß Anspruch 22, das nach dem Schritt (h) folgende Schritte aufweist:
(i) Anlegen von Laserenergie einer im wesentlichen gleichen Größe gleichzeitig an jeden eines dritten Satzes von Orten, deren Anzahl gleich der Anzahl von Orten in dem ersten Satz ist, wobei jeder der Orte in dem dritten Satz zwischen einem Paar von Orten in dem ersten Satz ist, um dadurch den Spulenkörper (10) an die Wand (4) an dem dritten Satz von Orten zu schweißen, derart, daß nur eine minimale Fehlausrichtung zwischen dem mit einer Linse versehenen Ende der Faser (16) und dem Laser (6) beim Abkühlen der Schweißverbindungen an dem dritten Satz von Orten auftritt,
(j) Wiederausrichten des mit einer Linse versehenen Endes der Faser (16) bezüglich des Lasers (6) in den zwei Dimensionen senkrecht zu der Achse der Faser, um jede Fehlausrichtung zu korrigieren, die zwischen denselben als Ergebnis des Laserschweißens an dem dritten Satz von Positionen auftritt,
(k) Anlegen von Laserenergie einer im wesentlichen gleichen Größe gleichzeitig an jeden eines vierten Satzes von Orten, deren Anzahl gleich der Anzahl von Orten in dem zweiten Satz ist, wobei jeder der Orte in dem vierten Satz zwischen einem Paar von Orten in dem zweiten Satz ist, wodurch der Spulenkörper (10) an die Metallröhre (9) an dem vierten Satz von Orten geschweißt wird, wobei die Laserenergie durch den Abschnitt (23) mit reduzierter Dicke des Spulenkörpers gerichtet wird, derart, daß beim Abkühlen der Schweißverbindungen an dem vierten Satz von Orten eine Verschiebung der Röhre relativ zu dem Spulenkörper im wesentlichen beseitigt ist, und
(l) Wiederausrichten des mit einer Linse versehenen Endes der Faser (16) bezüglich des Lasers (6) in den zwei Dimensionen senkrecht zu der Achse der Faser, um jede Fehlausrichtung zu korrigieren, die zwischen denselben als Ergebnis des Laserschweißens an dem vierten Satz von Orten auftritt.

24. Ein Verfahren gemäß Anspruch 22, das ferner nach dem Schritt (h) folgenden Schritt aufweist:
Nahtschweißen des Spulenkörpers (10) an die Wand (4) des Rahmens und des Spulenkörpers an die Metallröhre (9), um dieselben dadurch hermetisch abzudichten.

25. Ein Verfahren gemäß Anspruch 23, das ferner nach dem Schritt (1) folgenden Schritt aufweist:
Nahtschweißen des Spulenkörpers (10) an die Wand (4) des Rahmens und des Spulenkörpers an die Metallröhre (9), um dieselben dadurch hermetisch abzudichten.

26. Ein Verfahren gemäß Anspruch 23, bei dem die Metallröhre (9) in einer starren Montagevorrichtung (203) befestigt ist, und der Rahmen in einer zweiten Montagevorrichtung (223) befestigt ist, die bezüglich derselben bewegbar ist, und bei dem die Ausrichtungsschritte (c), (f), (h), (j) und (1) erreicht werden, indem der Rahmen bezüglich des befestigten Endes der Röhre bewegt wird.

27. Ein Verfahren gemäß Anspruch 22, bei dem die Metallröhre (9) in einer starren Montagevorrichtung (203) befestigt ist, und der Rahmen in einer zweiten Montagevorrichtung (223) befestigt ist, die bezüglich derselben bewegbar ist, und bei dem die Ausrichtungsschritte (c), (f) und (h) erreicht werden, indem der Rahmen bezüglich des befestigten Endes der Röhre bewegt wird.

28. Ein Verfahren gemäß Anspruch 23, bei dem der Rahmen in einer starren Befestigungsvorrichtung (203) befestigt ist, und das freie Ende der Metallröhre (9) gegenüber dem mit einer Linse versehenen Ende der Faser (16) in einer zweiten Montagevorrichtung (223) befestigt ist, die bezüglich des Rahmens bewegbar ist, und bei dem die Ausrichtungsschritte (c), (f), (h), (j) und (1) erreicht werden, indem das freie Ende der Röhre manipuliert wird.

29. Ein Verfahren gemäß Anspruch 22, bei dem der Rahmen in einer starren Montagevorrichtung (203) befestigt ist, und das freie Ende der Metallröhre (9) gegenüber dem mit einer Linse versehenen Ende der Faser (16) in einer zweiten Montagevorrichtung (223) befestigt ist, die bezüglich des Rahmens bewegbar ist, und bei dem die Ausrichtungsschritte (c), (f) und (h) erreicht werden, indem das freie Ende der Röhre manipuliert wird.

30. Ein Verfahren gemäß Anspruch 23, bei dem der Rahmen in einer starren Befestigungsvorrichtung (203) befestigt ist, und das freie Ende der Metallröhre (9) gegenüber dem mit einer Linse versehenen Ende der Faser (16) in einer zweiten Montagevorrichtung (223) befestigt ist, die bezüglich des Rahmens bewegbar ist, wobei die Länge der Metallröhre (9) zwischen dem freien Ende des Spulenkörpers (10) größer als die Länge der Röhre zwischen dem mit einer Linse versehenen Ende der Faser (16) und dem Spulenkörper (10) ist, und bei dem die Ausrichtungsschritte (c), (f), (h), (j) und (1) durch Manipulieren des freien Endes der Röhre erreicht werden, derart, daß eine Bewegung des freien Endes der Röhre um eine vorbestimmte Strecke in einer Bewegung des mit einer Linse versehenen Endes der Faser (16) um eine Strecke resultiert, die proportional zu dem Verhältnis der Längen reduziert ist.

31. Ein Verfahren gemäß Anspruch 22, bei dem der Rahmen in einer starren Montagevorrichtung (203) befestigt ist, und das freie Ende der Metallröhre (9) gegenüber dem mit einer Linse versehenen Ende der Faser (16) in einer zweiten Montagevorrichtung (223) befestigt ist, die bezüglich des Rahmens bewegbar ist, wobei die Länge der Metallröhre (9) zwischen dem freien Ende und dem Spulenkörper (10) größer als die Länge der Röhre zwischen dem mit einer Linse versehenen Ende der Faser (16) und dem Spulenkörper (10) ist, und bei dem die Ausrichtungsschritte (c), (f) und (h) erreicht werden, indem das freie Ende der Röhre manipuliert wird, derart, daß eine Bewegung des freien Endes der Röhre um eine vorbestimmte Strecke in einer Bewegung des mit einer Linse versehenen Endes der Faser (16) um eine Strecke resultiert, die proportional zu dem Verhältnis der Längen reduziert ist.

## Revendications

1. Montage à fibre optique comprenant
une fibre optique (16) ayant une partie d'extrémité fixée dans un organe de traversée (9),
une monture de composant optique comportant un composant optique (6) monté sur celle-ci et ayant un organe de paroi (4) pourvu d'une ouverture (18) dans celui-ci, la partie d'extrémité de la fibre optique (16) s'étendant à travers l'ouverture (18), et étant alignée en relation couplée optiquement avec le composant (6), et
des premiers moyens d'alignement (10) destinés à fixer un alignement de l'extrémité de la fibre (16) avec le composant (6), et des deuxièmes moyens d'alignement (11) destinés à fixer un alignement secondaire subséquent,
dans lequel les moyens d'alignement sont tous deux fixés à l'organe de paroi (4) et à l'organe de traversée (9), les premiers moyens d'alignement (10) étant fixés à l'organe de traversée à proximité du composant (6), et les deuxièmes moyens d'alignement (11) étant fixés à l'organe de traversée (9) à une distance relativement supérieure du composant,
caractérisé en ce que les premiers moyens d'alignement sont prévus pour fournir un alignement fixe par rapport à un déplacement dans l'ensemble des trois dimensions, au premier point de fixation, mais permettre un mouvement rotationnel de l'organe de traversée (9) autour du premier point de fixation, et en ce que les deuxièmes moyens d'alignement sont prévus pour fournir un alignement subséquent fixe de l'extrémité de la fibre (16) avec le composant (6), en empêchant tout autre mouvement rotationnel de l'organe de traversée (9) autour du premier point de fixation.

2. Montage selon la revendication 1, dans lequel les premiers (10) et deuxièmes moyens d'alignement (11) comprennent un premier et un deuxième organes formant bague.

3. Montage selon la revendication 1 ou 2, dans lequel les moyens d'alignement (10, 11) sont tous deux fixés sur le côté de l'organe de paroi (4) opposé au composant (6).

4. Montage selon la revendication 2, dans lequel le premier organe formant manchon (10) enferme de manière coaxiale, et constitue un ajustement proche avec, l'organe de traversée (9).

5. Montage selon la revendication 2, 3 ou 4, dans lequel le deuxième organe formant bague (11) est axialement allongé, est fixé à l'organe de paroi (4), et enferme le premier organe formant bague (10) à l'extrémité proche du composant (6), et est fixé à l'organe de traversée (9) à l'extrémité distante du composant.

6. Montage selon l'une quelconque des revendications précédentes, dans lequel au moins un moyen d'alignement est fixé à l'organe de traversée (9) par des soudures.

7. Montage selon l'une quelconque des revendications précédentes, dans lequel au moins un moyen d'alignement est fixé à l'organe de paroi (4) par des soudures.

8. Montage selon la revendication 6 ou la revendication 7, dans lequel les soudures sont radialement équilibrées.

9. Montage selon la revendication 8, dans lequel les soudures constituent un joint circonférentiel.

10. Montage selon la revendication 2, dans lequel le premier organe formant bague comprend une bobine formant manchon (10), ayant une bride (22) à une extrémité et une partie en cylindre (23) s'étendant vers l'extérieur de la bride, dans lequel la bride (22) est fixée à l'organe de paroi (4) et la partie en cylindre est fixée à l'organe de traversée (9).

11. Montage selon l'une quelconque des revendications précédentes, dans lequel le composant (9) est un laser à semi-conducteur.

12. Montage à fibre optique comprenant un boîtier pour un dispositif optoélectronique (6), comportant
un châssis avec une paroi (4) comportant un trou dans celle-ci,
un dispositif optoélectronique (6) monté à l'intérieur du châssis, une facette du dispositif étant tournée vers le trou (18) de la paroi (4), et
une fibre optique (16), comportant une extrémité à lentille sur celle-ci, la fibre optique étant solidement fixée et hermétiquement jointe dans un tube métallique (9), l'extrémité à lentille de la fibre optique (16) étant disposée à l'intérieur du châssis et optiquement alignée avec la facette du dispositif (6),
caractérisé en ce que
une bobine (10) est prévue, ayant une partie d'épaisseur réduite (23) sur celle-ci, séparée d'une extrémité de celle-ci, l'extrémité de la bobine venant en butée contre la paroi (4) et recouvrant le trou (18) situé dans celle-ci, la partie d'épaisseur réduite (23) de la bobine entourant le tube métallique (9), la bobine (10) étant fixée à la paroi (4) à l'extrémité de celle-ci, et la bobine étant fixée au tube au voisinage de la partie d'épaisseur réduite de celle-ci par au moins deux soudures radialement équilibrées fixant un alignement de l'extrémité de la fibre à la facette du dispositif (6) dans la dimension parallèle à l'axe de la fibre, et fixant un alignement principal dans les deux dimensions perpendiculaires à l'axe de la fibre, et en ce qu'une bague tubulaire à bride (11) entoure la bobine (10), et est fixée à la paroi (4) à une extrémité de celle-ci, et fixée à l'autre extrémité de celle-ci au tube métallique (9) pour fixer un alignement secondaire de l'extrémité de la fibre (16) à la facette du dispositif (6) dans les deux dimensions perpendiculaires à l'axe de la fibre.

13. Montage selon la revendication 12, dans lequel la fixation de la bobine (10) au tube (9) comprend une pluralité de soudures par point radialement équilibrées, chacune d'entre elles s'écoulant dans au moins une soudure par point adjacente pour former une liaison continue entre la bobine (10) et le tube (9) de manière à joindre hermétiquement la bobine au tube.

14. Montage selon la revendication 12 ou 13, dans lequel la fixation de la bobine (10) à la paroi (4) comprend une pluralité de soudures par point, chacune d'entre elles s'écoulant dans au moins une soudure par point adjacente pour former une liaison continue entre la bobine (10) et la paroi (4) de manière à joindre hermétiquement la bobine à la paroi.

15. Montage selon la revendication 12 ou 13, dans lequel la fixation de la bobine (10) à la paroi (4) comprend une soudure de jonction formant une liaison continue entre la bobine (10) et la paroi (4) de manière à joindre hermétiquement la bobine à la paroi.

16. Montage selon la revendication 12, comprenant en outre une bague support (11), ayant une ouverture à une extrémité de celle-ci et une cavité agrandie dans celle-ci, la bobine (10) étant reçue à l'intérieur de la cavité et entourée par la bague (11), le tube métallique (9) s'étendant à travers l'ouverture dans la bague, la bague étant fixée et hermétiquement jointe au tube (9) et à la paroi (4).

17. Montage selon la revendication 16, dans lequel les fixations entre la bague (11) et le tube (9), et entre la bague (22) et la paroi (4) comprenant chacune une soudure de jonction formant une liaison continue de manière à joindre hermétiquement le tube à la bague et la bague à la paroi.

18. Procédé d'alignement et de fixation en relation couplée optiquement d'une fibre optique (16) ayant une partie d'extrémité fixée dans un organe de traversée (9) et un composant optique (6) monté sur une monture de composant ayant un organe de paroi (4) pourvu d'une ouverture (18) dans celui-ci, le procédé comprenant les étapes consistant à
(a) positionner la partie d'extrémité de fibre optique (16) dans l'organe de traversée (9) dans l'ouverture (18) et aligner la fibre en relation optiquement couplée avec le composant (6),
(b) fixer lesdits moyens d'alignement (10) à l'organe de paroi (4),
(c) fixer les premiers moyens d'alignement (10) à l'organe de traversée (9) sur une première région fixe de celui-ci à proximité du composant (6),
(d) vérifier la relation couplée optiquement et aligner de nouveau la fibre (16),
(e) fixer les deuxièmes moyens d'alignement (11) à l'organe de paroi (4), et
(f) fixer les deuxièmes moyens d'alignement (11) à l'organe de traversée (9) sur une deuxième région de fixation distale de celui-ci, éloignée du composant (6) et de la première région de fixation,
caractérisé en ce que les premiers moyens d'alignement fournissent un alignement principal par fixation de l'organe de traversée (9) par rapport au déplacement dans l'ensemble des trois dimensions sur la première région de fixation, mais permettent une rotation de l'organe de traversée (9) autour de la première région de fixation, en ce que tout nouvel alignement est fourni en appliquant des forces de levier appropriées, l'organe de traversée (9) étant en outre fixé plus loin du composant (6) que la première région de fixation, déformant ainsi la fixation des premiers moyens d'alignement (10) pour obtenir de nouveau la relation couplée optiquement, et en ce que les deuxièmes moyens d'alignement fixent un alignement secondaire subséquent empêchant toute autre rotation de l'organe de traversée (9) autour de la première région de fixation.

19. Procédé selon la revendication 18, dans lequel l'une quelconque des étapes de fixation comporte une soudure au laser.

20. Procédé selon la revendication 18 ou 19, comportant la fourniture de premiers (10) et deuxièmes moyens d'alignement (11), comprenant des organes formant bague s'étendant circonférentiellement autour de l'organe de traversée (9), et dans lequel l'une quelconque des étapes de fixation comprend la fixation desdits organes formant bague avec des soudures radialement équilibrées.

21. Procédé selon la revendication 20, comportant la fixation circonférentielle d'au moins d'un des organes formant bague à l'organe de paroi (4) et à l'organe de traversée (9) avec des soudures, de façon à fournir un joint hermétique entre l'organe de paroi et l'organe de traversée.

22. Procédé d'alignement et de fixation de l'extrémité à lentille d'une fibre optique (16) par rapport à une région émettrice de lumière d'une facette d'un laser à semi-conducteur (6), monté à l'intérieur d'un châssis, le châssis comportant une paroi (4) avec un trou (18) dans celle-ci, de façon que l'accès à l'intérieur du châssis puisse s'effectuer, le procédé comprenant les étapes consistant à
(a) faire coulisser une bobine (10) sur un tube métallique (9) auquel la fibre (16) est solidement fixée et hermétiquement jointe,
(b) déplacer relativement le châssis et le tube métallique (9), pour provoquer la projection de la fibre (16) à travers le trou (18), et à proximité de la région émettrice de lumière du laser (6),
(c) aligner l'extrémité à lentille de la fibre (16) avec la région du laser (6), pour optimiser le couplage de lumière provenant du laser dans la fibre,
(d) faire coulisser une bobine (10) le long d'un tube métallique (9), pour amener une extrémité de la bobine en butée contre la paroi (4), de façon que l'extrémité de la bobine recouvre entièrement le trou (18) dans la paroi (4),
(e) appliquer simultanément de l'énergie laser en amplitude sensiblement égale sur chacun parmi un premier ensemble d'emplacements comprenant au moins deux emplacements de façon à souder la bobine (10) à la paroi (4) sur le premier ensemble d'emplacements, de façon qu'il y ait un désalignement radial minimum entre l'extrémité à lentille de la fibre (16) et le laser (6) lors du refroidissement des soudures,
(f) aligner de nouveau l'extrémité à lentille de la fibre (16) par rapport au laser (6), pour corriger tout désalignement apparaissant entre eux en conséquence du soudage au laser au premier ensemble d'emplacements,
(g) appliquer simultanément de l'énergie laser en amplitude sensiblement égale sur chacun parmi un deuxième ensemble d'emplacements comprenant au moins deux emplacements de façon à souder la bobine (10) au tube métallique (9), l'énergie laser étant dirigée à travers une partie d'épaisseur réduite (23) de la bobine, de façon que lors du refroidissement des soudures sur le deuxième ensemble d'emplacements, le déplacement du tube (9) par rapport à la bobine (10) soit sensiblement éliminé,
(h) aligner de nouveau l'extrémité à lentille de la fibre (16) par rapport au laser (6), pour corriger tout désalignement apparaissant entre eux en conséquence du soudage au laser au deuxième ensemble d'emplacements,
(m) fixer les deuxièmes moyens d'alignement (11) à l'organe de paroi (4) et au tube métallique (9) dans une région de fixation de celui-ci, distante du composant (6) et de la bobine (10),
caractérisé en ce que les étapes (e) à (h) constituent un alignement de l'extrémité à lentille de la fibre (16) avec le laser (6) dans la dimension parallèle à l'axe de la fibre, et un alignement principal dans les deux dimensions perpendiculaires à l'axe de la fibre, et en ce que l'étape (m) fixe un alignement secondaire subséquent dans les deux dimensions perpendiculaires à l'axe de la fibre.

23. Procédé selon la revendication 22, comprenant, après l'étape (h), les étapes consistant à:
(i) appliquer simultanément de l'énergie laser en amplitude sensiblement égale sur chacun parmi un troisième ensemble d'emplacements en nombre égal au nombre d'emplacements du premier ensemble, chacun des emplacements du troisième ensemble étant situé entre deux emplacements du premier ensemble, de façon à souder la bobine (10) à la paroi (4) sur le troisième ensemble d'emplacements, de façon qu'il y ait un désalignement minimum entre l'extrémité à lentille de la fibre (16) et le laser (6) lors du refroidissement des soudures sur le troisième ensemble d'emplacements,
(j) aligner de nouveau l'extrémité à lentille de la fibre (16) par rapport au laser (6), dans les deux dimensions perpendiculaires à l'axe de la fibre pour corriger tout désalignement apparaissant entre eux en conséquence du soudage au laser au troisième ensemble d'emplacements,
(k) appliquer simultanément de l'énergie laser en amplitude sensiblement égale sur chacun parmi un quatrième ensemble d'emplacements en nombre égal au nombre d'emplacements du deuxième ensemble, chacun des emplacements du quatrième ensemble étant situé entre deux emplacements du deuxième ensemble, de façon à souder la bobine (10) au tube métallique (9) sur le quatrième ensemble d'emplacements, l'énergie laser étant dirigée à travers la partie de dimensions réduites (23) de la bobine, de façon que lors du refroidissement des soudures sur le quatrième ensemble d'emplacements, le déplacement du tube par rapport à la bobine soit sensiblement éliminé, et
(l) aligner de nouveau l'extrémité à lentille de la fibre (16) par rapport au laser (6), dans les deux dimensions perpendiculaires à l'axe de la fibre pour corriger tout désalignement apparaissant entre eux en conséquence du soudage au laser au quatrième ensemble d'emplacements.

24. Procédé selon la revendication 22, comprenant en outre, après l'étape (h), l'étape consistant à
souder par jonction la bobine (10) à la paroi (4) du châssis et la bobine au tube métallique (9), de façon à joindre celle-ci hermétiquement.

25. Procédé selon la revendication 23, comprenant en outre , après l'étape (1), l'étape consistant à
souder par jonction la bobine (10) à la paroi (4) du châssis et la bobine au tube métallique (9), de façon à joindre celle-ci hermétiquement.

26. Procédé selon la revendication 23, dans lequel le tube métallique (9) est monté dans une monture rigide (203), et le châssis est monté dans une deuxième monture (223) mobile par rapport à celle-ci, et dans lequel les étapes d'alignement (c), (f), (h), (j) et (l), sont exécutées en déplaçant le châssis par rapport à l'extrémité fixe du tube.

27. Procédé selon la revendication 22, dans lequel le tube métallique (9) est monté dans une monture rigide (203), et le châssis est monté dans une deuxième monture (223) mobile par rapport à celle-ci, et dans lequel les étapes d'alignement (c), (f) et (h), sont exécutées en déplaçant le châssis par rapport à l'extrémité fixe du tube.

28. Procédé selon la revendication 23, dans lequel le châssis est monté dans une monture rigide (203) et l'extrémité libre du tube métallique (9) opposée à l'extrémité à lentille de la fibre (16) est montée dans une deuxième monture (223) mobile par rapport au châssis, et dans lequel les étapes d'alignement (c), (f), (h), (j) et (l), sont exécutées en manipulant l'extrémité libre du tube.

29. Procédé selon la revendication 22, dans lequel le châssis est monté dans une monture rigide (203) et l'extrémité libre du tube métallique (9) opposée à l'extrémité à lentille de la fibre (16) est montée dans une deuxième monture (223) mobile par rapport au châssis, et dans lequel les étapes d'alignement (c), (f), (h), (j) et (l), sont exécutées en manipulant l'extrémité libre du tube.

30. Procédé selon la revendication 23, dans lequel le châssis est monté dans une monture rigide (203) et l'extrémité libre du tube métallique (9) opposée à l'extrémité à lentille de la fibre (16) est montée dans une deuxième monture (223) mobile par rapport au châssis, la longueur du tube métallique (9) entre l'extrémité libre et la bobine (10) étant supérieure à la longueur du tube entre l'extrémité à lentille de la fibre (16) et la bobine (10), et dans lequel les étapes d'alignement (c), (f), (h), (j) et (l), sont exécutées en manipulant l'extrémité libre du tube, de façon que le mouvement de l'extrémité libre du tube sur une distance prédéterminée provoque un mouvement de l'extrémité à lentille de la fibre (16) sur une distance qui est réduite en proportion du rapport des longueurs.

31. Procédé selon la revendication 22, dans lequel le châssis est monté dans une monture rigide (203) et l'extrémité libre du tube métallique (9) opposée à l'extrémité à lentille de la fibre (16) est montée dans une deuxième monture (223) mobile par rapport au châssis, la longueur du tube métallique (9) entre l'extrémité libre et la bobine (10) étant supérieure à la longueur du tube entre l'extrémité à lentille de la fibre (16) et la bobine (10), et dans lequel les étapes d'alignement (c), (f) et (h), sont exécutées en manipulant l'extrémité libre du tube, de façon que le mouvement de l'extrémité libre du tube sur une distance prédéterminée provoque un mouvement de l'extrémité à lentille de la fibre (16) sur une distance qui est réduite en proportion du rapport des longueurs.
